(19) Europäisches Patentamt
European Patent Office
Office européen des brevets

(11) EP 2 169 357 B1

(12) EUROPEAN PATENT SPECIFICATION

(45) Date of publication and mention
of the grant of the patent:
**19.09.2012 Bulletin 2012/38**

(51) Int Cl.:
*G01D 5/347* (2006.01)          *G06T 7/00* (2006.01)
*G06T 3/40* (2006.01)

(21) Application number: **08016751.3**

(22) Date of filing: **24.09.2008**

(54) **A two-dimension position encoder**

Zweidimensionaler Positionsanzeiger

Codeur de position bidimensionnel

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**31.03.2010 Bulletin 2010/13**

(73) Proprietor: **CSEM Centre Suisse d'Electronique et de Microtechnique SA - Recherche et Développement 2002 Neuchâtel (CH)**

(72) Inventors:
• **Heim, Pascal**
**2024 St-Aubin-Sauges (CH)**
• **Hasler, David**
**2000 Neuchâtel (CH)**
• **Franzi, Edoardo**
**1400 Yverdon (CH)**
• **Masa, Peter**
**2208 Les Hauts-Geneveys (CH)**

(74) Representative: **GLN**
**Rue du Puits-Godet 8a**
**2000 Neuchâtel (CH)**

(56) References cited:
**EP-A- 1 365 214          GB-A- 2 019 687**
**US-A- 3 825 267          US-A1- 2006 106 567**
**US-A1- 2007 076 973**

## Description

### Field of the invention

The present invention relates generally to the field of two-dimension absolute position encoders, particularly to encoders that use a reference pattern applied on an object and a camera in order to measure the position of the camera with respect to the object.

### Background of the invention

Position encoders are well known in the art. They generally consist in engraving, printing or projecting a wide code on a flat surface of an object. By analysing a small portion of the code, it shall be possible to determine the position of the code portion within the entire wide code. Generally, the small portion is acquired by a camera and consequently, the position of the camera with respect to the object can be computed.

Such systems can compute one-dimension position or two-dimension position.

The document WO 2006/067481 presents a two-dimension position measurement using a two-dimension code applied on a flat surface of an object, the code being composed of coloured points. The whole pattern is appropriately chosen so that a local observation is always a unique sequence of particular coloured points, and can consequently be used to determine the position of the local observed pattern among the whole code. Additionally, an interpolation is performed between particular points of the whole code to compute a position that is more precise than the resolution of the code. However, such a system requires a colour camera, and it can be difficult, under certain conditions (lighting for example) for a camera to discern between colours. Additionally, as such a system may have a resolution in the order of a micron and can be used in an industrial environment, they could be very sensitive to dust. A speck of dust may lead to an erroneous reading of one element of the code, and thus a miscomputation of the position.

The document EP1553487 describes a two-dimension position measurement system that is less sensitive to dust. A two-dimension code is built and used to form a pattern covering the surface of an object. To cover a surface of m x n data, a one-dimension binary code of length l = m x n is built, the code being composed of unique codewords. The code is then folded using different techniques to be applied on the whole surface of the object. Redundancy is classically added in the code, allowing error correction. The system is resilient to some reading errors, due for example to dust, but the method for correcting errors is quite complex, requiring a lot of processing power. Moreover, the resolution of this system is directly the resolution of the pattern of the object (i.e. the spacing between two consecutive bits of the code). Consequently, to get a resolution in the order of the micron, the pattern shall be engraved or printed with the same resolution. If the object is large, the whole wide code will have to be very large, and the portion of the code to observe will be also very large in order to identify without ambiguity the position of the code portion within the wide whole code. Computing the position from the large code portion is also processing power consuming.

The present invention proposes a method such that these drawbacks are avoided.

### Summary of the invention

The present invention discloses a two-dimension code comprising a two-dimension absolute code interlaced with a two-dimension regular pattern, the two-dimension absolute code being given by

$$b_{t,u+1} = \begin{cases} b_{t,u} & \text{if} \quad a_u = 0 \\ b_{t-1,u} & \text{if} \quad a_u = 1 \end{cases}$$

with $b_{t,0} = a_t$, and $a_t$ and $a_u$ being binary values of codes $\{a_t\}$ and $\{a_u\}$ respectively, and wherein all codewords $\underline{a}_t$ and $\underline{a}_u$ of codes $\{a_t\}$ and $\{a_u\}$ respectively are unique within the codes $\{a_t\}$ and $\{a_u\}$ respectively.

The present invention also discloses a two-dimension position measurement system comprising:

-    an object on which is applied a two-dimension code composed of a two-dimension absolute code interlaced with a two-dimension regular pattern, and
-    a camera for acquiring a portion of the two-dimension code,

the two-dimension absolute code being given by

$$b_{t,u+1} = \left\{ \begin{array}{lll} b_{t,u} & \text{if} & a_u = 0 \\ b_{t-1,u} & \text{if} & a_u = 1 \end{array} \right.$$

with $b_{t,0} = a_t$ and $a_t$ and $a_u$ being binary values of codes $\{a_t\}$ and $\{a_u\}$ respectively, and wherein all codewords $\underline{a}_t$ and $\underline{a}_u$ of codes $\{a_t\}$ and $\{a_u\}$ respectively are unique within the codes: $\{a_t\}$ and $\{a_u\}$ respectively.

The present invention finally discloses a method for measuring a two-dimension position of a camera with respect to an object on which the above-mentioned two-dimension code is applied, the method comprising the following step:

- acquiring an image of the two-dimension code applied on the object, using the camera,
- extracting, from the acquired image, the absolute code in the form of a two-dimension matrix $\underline{b}_{t,u}$,
- from the two-dimension matrix $\underline{b}_{t,u}$, decoding an horizontal codeword $\underline{a}_t$ and a vertical codeword $\underline{a}_u$,
- from the horizontal codeword $\underline{a}_t$ and the vertical codeword $\underline{a}_u$, computing the absolute position ([X], [Y]) of the camera with respect to the object, and
- from the absolute position ([X], [Y]) and by using the regular pattern, computing a precise position (X, Y, θ).

**Brief description of the drawings**

The above and other objects, features, and advantages of the present invention will become further apparent from the following description of the preferred embodiment taken in conjunction with the accompanying drawings, in which:

- figure 1 depicts a linear shift feedback register used to produce an absolute code,
- figure 2 presents two embodiments for a pattern to be applied on an object whose position is to measure,
- figure 3 presents the horizontal and vertical projection of the pattern,
- figure 4 presents the Fast Fourier Transform of a regular pattern,
- figure 5 presents the Fast Fourier Transform of a rotated regular pattern, and
- figure 6 depicts an application example of the two-dimension position computation method.

**Detailled description**

In the following description we will firstly present the construction of efficient one-dimension codes and a method to compute the position of a portion of this one-dimension code within the whole code. The construction of two-dimension codes, based on a one-dimension code, will then be presented, followed by a method to read efficiently a portion of the two-dimension code and compute the position of the portion of this code within the whole two-dimension code. A mean to improve the resolution of the computed position will finally be proposed, as well as the computation method.

**One-dimension code**

In this section, a suitable one-dimension code is proposed, as a first step to determine the pattern to be applied on the surface of an object.

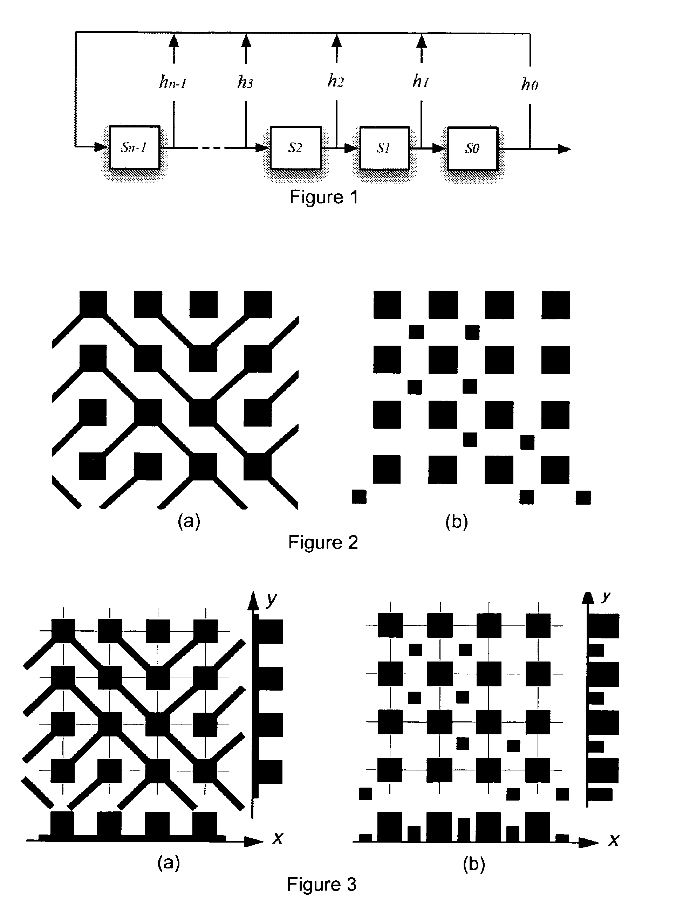

A one-dimension code $\{s_i\}$ is built using a LFSR (Linear Feedback Shift Register) as depicted in figure 1. The code $\{s_i\}$ is defined by a seed value $\underline{a}_0$ and a feedback equation :

$$\underline{a}_0 = \left[ \begin{array}{cccccc} s_0 & s_1 & s_2 & s_3 & \ldots & s_{n-1} \end{array} \right]$$

$$s_{i+1} = h_{n-1} \cdot s_i + h_n \cdot s_{i-1} + \ldots + h_0 \cdot s_{i-n},$$

where $h_i$ is a binary number. The vector

$$\underline{h} = \left[ \begin{array}{cccc} h_0 & h_1 & \ldots & h_{n-1} \end{array} \right]$$

is a filter that can be represented as a polynomial

$$h(x) = h_{n-1}x^{n-1} + \ldots + h_1 x + h_0$$

called the feedback polynomial. The code produced by a LFSR is a pseudo-random code.

For a given LFSR length $n$, all seed values $\underline{a}_0$ and feedback polynomials $h(x)$ do not necessarily produce a periodic code. Suitable seed values $\underline{a}_0$ and feedback polynomials $h(x)$ are obtained by trial and error techniques. For a given LFSR length $n$, all combinations of seed-value and feedback polynomial are tested. A simulation of the code is performed for each set of seed value $\underline{a}_0$ and feedback polynomial $h(x)$. If, additionally, the smallest period $N$ of the code produced suits the physical setup where the encoder will be used (i.e. if the period $N$ is long enough so that the code covers an adequate physical length of the object), the code is declared valid.

An example of a 9 bits code, with period $N = 511$ is given by

$$\underline{a}_0 = \begin{bmatrix} 1 & 0 & 0 & 1 & 1 & 1 & 0 & 0 & 0 \end{bmatrix}$$
$$h(x) = x^6 + x^5 + x^4 + x^3 + x + 1. \tag{1}$$

One of the properties of the whole code, in addition to the fact that it repeats itself every $N$ bits, is that every codeword is unique, a codeword being the observation of consecutive bits of at least $n$-bit length.

Consequently, it is possible, by using such codes, to determine, without ambiguity, the position $p$ of any codeword along the entire code. The one-dimension position $p$ is computed as the maximum of the correlation between the codeword of $n$ bits $\underline{a}_k$ and the whole code $\{si\}$:

$$p = \underset{k}{\operatorname{argmax}} \left( \sum_{i=0}^{n} \operatorname{Corr}(a_i, s_{i+k}) \right) \tag{2}$$

where Corr() is the correlation function.

**Two-dimension code**

A method to get a suitable two-dimension code will now be proposed in this section. Let $\{a_t\}$ denote a periodic code of length $N$, $a_t$ denotes the value of this code at vocation $t$ and $\underline{a}_t$ a vector of length $n+1$ (also named a codeword) containing a subset of code $\{a_t\}$, i.e.

$$\underline{a}_t = \begin{bmatrix} a_t & a_{t+1} & a_{t+2} & \ldots & a_{t+n} \end{bmatrix}$$

Given a one dimensional code $\{a_t\}$, built with respect to the one-dimension code mentioned above, this section explains how to get a two-dimensional code $\{b_{t,u}\}$. The index $t$ stands for the horizontal index, the index $u$ for the vertical index. It has to be noted that "vertical" and "horizontal" does not reflect the real orientation of the code on the object, but is used as a practical mean to identify the two dimensions of the $\underline{b}_{t,u}$ matrix. In two dimensions, two codes are needed to compute the position of a code subset within the whole code one for defining the horizontal location $t$, and another for defining the vertical location $u$. Let for example $a_t$ be equal to

$$\underline{a}_t = \begin{bmatrix} 0 & 1 & 1 & 0 & 0 & 0 & 0 & 1 & 1 & 1 \end{bmatrix}$$

As mentioned above, the whole code $\{a_t\}$ is periodic with period N, which means that $a_t = a_{t+N}$. To extend the code in two dimensions, one code $\{a_t\}$ is used horizontally, and one code $\{a_u\}$ is used vertically, $\{a_t\}$ and $\{a_u\}$ being regardless equal or not. The first line of $\{b_{t,u}\}$ contains the code $\{a_t\}$. It is replicated on the next lines, and the way to replicate the line is dictated by the vertical code $\{a_u\}$. The location of the code on the second line of $\{b_{t,u}\}$ determines whether the first vertical bit is a 1 or a 0. When the vertical bit $a_u$ is a 0, the code is replicated *as is* on the next line, and when the vertical bit $a_u$ is a 1, the code is *replicated and shifted* one position to the right. In other words,

$$b_{t,u+1} = \begin{cases} b_{t,u} & \text{if} \quad a_u = 0 \\ b_{t-1,u} & \text{if} \quad a_u = 1 \end{cases}$$

Since, from the construction of $\{a_t\}$, every codeword $\underline{a}_t$ is unique, and every codeword $\underline{a}_t$ shifted by one position is also a unique codeword, it is guaranteed that the shift-or the absence of shift-is detectable and the two-dimension position may be computed by analyzing a horizontal codeword $\underline{a}_t$ and a vertical codeword $\underline{a}_u$.

For example by taking the same code in both directions ($\{a_t\}=\{a_u\}$), the two-dimension code $\{b_{t,u}\}$ becomes

$$\underline{\mathbf{b}}_{t,u}: \qquad \underline{\mathbf{a}}_u:$$

$$\begin{bmatrix} 0 & 1 & 1 & 0 & 0 & 0 & 0 & 1 & 1 & 1 \\ 0 & 1 & 1 & 0 & 0 & 0 & 0 & 1 & 1 & 1 \\ 0 & 0 & 1 & 1 & 0 & 0 & 0 & 0 & 1 & 1 \\ 1 & 0 & 0 & 1 & 1 & 0 & 0 & 0 & 0 & 1 \end{bmatrix} \qquad \begin{bmatrix} 0 \\ 1 \\ 1 \\ \cdots \end{bmatrix} \qquad \text{3)}$$

The code built with the method described is applied on the surface of an object, in the form of a pattern, using known techniques. For example, a "1" could be encoded by the presence of a black or dark square and a "0" could be encoded by the absence of a black or dark square.

**Decoding the code**

The pattern applied on the object is read by a camera. An image of the surface of the object is acquired, the image being composed of a subset of the whole pattern. Using known signal processing techniques, the image acquired by the camera can easily be processed to get the two-dimension matrix $\underline{b}_{t,u}$, which is a subset of the whole code applied on the object.

This section explains how to find the horizontal codeword $a_t$ and the vertical codeword $\underline{a}_u$ from the two-dimension matrix $\underline{b}_{t,u}$. In the context of position encoders, the useful information is $\{t,u\}$ which defines directly the horizontal coordinate [X] and vertical coordinate [Y] of the visible matrix $\underline{b}$ with respect to the origin of the code $\{b_{t,u}\}$. The decoding starts by computing the vertical codeword $\underline{a}_u$ followed by the horizontal codeword $\underline{a}_t$. Each line is compared to the next with a XOR operation. The XOR is performed bit by bit, with the next line, and each resulting bits are added together.

For example, taking the code of equation 3, the XOR operation results in all 0's when the line is not shifted and in a series of 1 or 0 if the line is shifted:

line 1
$$[0\ 1\ 1\ 0\ 0\ 0\ 0\ 1\ 1\ 1]$$

$$\text{XOR}$$

line 2
$$[0\ 1\ 1\ 0\ 0\ 0\ 0\ 1\ 1\ 1]$$

$$=$$

$$[0\ 0\ 0\ 0\ 0\ 0\ 0\ 0\ 0\ 0]$$

The same operation is also performed on the next line shifted one position to the right.

line 1

$$[0\ 1\ 1\ 0\ 0\ 0\ 0\ 1\ 1\ 1]$$

XOR

line 2 shifted

$$[?\ 0\ 1\ 1\ 0\ 0\ 0\ 0\ 1\ 1]$$

$$=$$

$$[?\ 1\ 0\ 1\ 0\ 0\ 0\ 1\ 0\ 0]$$

$$\sum[\ (0)\ \ 0\ \ 0\ \ 0\ \ 0\ \ 0\ \ 0\ \ 0\ \ 0\ \ 0\ ] = 0$$

$$\sum[\ (?)\ \ 1\ \ 0\ \ 1\ \ 0\ \ 0\ \ 0\ \ 1\ \ 0\ \ 0\ ] = 3$$

The line with all 0's corresponds to the best hypothesis. Indeed, in equation (3), the first and second lines are aligned (not shifted). As a consequence, the first vertical bit is a 0. The "?" is the bit taken to the left of the code. For efficiency reasons, it can be ignored, and the determination of whether the vertical bit is a 1 or a 0 can be performed only with the remaining 9 bits on the line:

Formally, the decoding of the vertical codeword $a_u$ follows:

$$\underline{\mathbf{a}}_u := \left( \sum_{t=1}^{n} \underline{\mathbf{b}}_{t,u} \text{ XOR } \underline{\mathbf{b}}_{t,u+1} > \sum_{t=1}^{n} \underline{\mathbf{b}}_{t,u} \text{ XOR } \underline{\mathbf{b}}_{t+1,u+1} \right)$$

where $n+1$ is the number of bits present on a line of the field of view, i.e. the width of the acquired matrix $\underline{b}_{t,u}$.

If an error correction is built in the vertical code, it should be applied before the decoding of the horizontal code

The horizontal codeword $\underline{a}_t$ is then decoded by computing the mean value $\underline{M}_t$ of every horizontal bit $\underline{b}_t$ using

$$a_t = \begin{cases} 0 & \text{if } M_t < 0.5 \\ 1 & \text{else} \end{cases} \tag{4}$$

The vertical code is used to determine which bit shall be used in every line to compute $M_t$:

$$M_t \ = \ \frac{1}{V} \sum_{i=0}^{V-1} b_{t_i, u+i}$$

$$t_{i+1} \ = \ \begin{cases} t_i & \text{if } a_{u+i} = 0 \\ t_i + 1 & \text{else} \end{cases}$$

$$t_0 \quad = \quad t$$

where $u$ is the vertical location of the first line of the matrix $\underline{b}$ and $V$ the number of visible bits available to the computation of $M_t$. The number of visible bits is the number of bits corresponding to the horizontal bit $\underline{a}_t$ that are available in the observed window.

In our former example the mean value $M_2$ is computed along the emphasized path below, and the result is $M_2=1$.

$$\underline{\mathbf{b}}_{t,u} = \begin{bmatrix} 0 & 1 & \boxed{1} & 0 & 0 & 0 & 0 & 1 & 1 & 1 \\ 0 & 1 & \boxed{1} & 0 & 0 & 0 & 0 & 1 & 1 & 1 \\ 0 & 0 & 1 & \boxed{1} & 0 & 0 & 0 & 0 & 1 & 1 \\ 1 & 0 & 0 & 1 & \boxed{1} & 0 & 0 & 0 & 0 & 1 \end{bmatrix}.$$

For $M_2$ computation, we have $V=4$ (4 bits are visible for computation), for $M_8$, we have $V=3$ and for $M_9$, we have $V=2$.

As described, the decoding takes advantage of the redundancy contained in matrix $\underline{b}_{t,u}$ and is resilient, to some extent, to errors introduced when reading the pattern applied on the object.

The horizontal and vertical positions ($[X]$, $[Y]$) are then computed from $\underline{a}_t$ and $\{a_t\}$ for the horizontal position, and from $\underline{a}_u$ and $\{a_u\}$ for the vertical position, using the relations:

$$\lfloor Y \rfloor \quad = \quad \operatorname*{argmax}_{h} \left( \sum_{i=0}^{n} \operatorname{Corr}(a_{u=i}, \{a_{u+h}\}) \right)$$

$$\lfloor X \rfloor \quad = \quad \operatorname*{argmax}_{h} \left( \sum_{i=0}^{n} \operatorname{Corr}(a_{t=i}, \{a_{t+h}\}) \right) + \sum_{i=0}^{\lfloor Y \rfloor} \{a_{u=i}\}$$

where Corr() is the correlation function.

The horizontal position $[X]$ is corrected to take into account the number of horizontal shifts applied to the horizontal code due to the vertical code. The number of shifts being equal to the number of "1" in the code from the origin to the vertical position. This number can easily be pre-computed and stored in a lookup table. The number of shifts has to be added to the horizontal location retrieved by decoding the horizontal code.

**Soft decoding**

This section presents another embodiment for decoding the pattern applied on the surface of the object.

The two-dimension code is read by a digital camera, and image processing means can be used to determine the bits in matrix $\underline{b}_{t,u}$. In practice however, the camera never reads 0's or 1's, but rather values ranging from 0 to an integer value, depending on the mean contrast of the square read for each bit. The values are usually compared to a threshold to convert the result into a binary value.

Instead of computing 0's and 1's as output of the camera, it is judicious to keep the camera output, and scale it down to [0...1]. Thus, the matrix $\underline{b}_{t,u}$ is composed of discrete values ranging from 0 to 1. The XOR operation of previous section, must be replaced with the difference of absolute values, i.e.

$$\underline{\mathbf{a}}_u := \left( \sum_{t=1}^{n} \left| \underline{\mathbf{b}}_{t,u} - \underline{\mathbf{b}}_{t,u+1} \right| > \sum_{t=1}^{n} \left| \underline{\mathbf{b}}_{t,u} - \underline{\mathbf{b}}_{t+1,u+1} \right| \right)$$

Apart from this change, the whole decoding procedure remains the same. The resilience of the result to errors of the camera is better using soft decoding.

**Improving resolution**

The two-dimension code described above and used to compute an absolute position, will be called, in the following description, the absolute code. The absolute position is computed with a resolution of one bit of the absolute code, i.e. of the spacing between two consecutive bits of the code applied on the surface of the object.

To achieve a higher resolution than the one obtained with the method previously described, it is possible to perform an interpolation. The idea is to interlace the absolute code described above, in a regular pattern composed of identical shapes evenly spaced in two dimensions. Two examples are depicted in figure 2. The regular pattern consists in a checkerboard made of large squares and the absolute code is embodied as the presence or absence of a small square in figure 2(b) or by the orientation of the line connecting two checkerboard squares in figure 2(a). Figure 2(a) depicts diagonal lines connecting the large squares, but the absolute code can also be embodied as horizontal or vertical lines connecting the large squares.

The camera is supposed to be aligned with the normal of the surface on which the pattern is applied. The angle θ is defined as the angle between the horizontal axis of the image acquired by the camera and the horizontal axis of the pattern covering the surface of the object.

The computation of the precise position can be divided in two situations.

-    A generic situation where both position and angle θ is unknown. This situation occurs when the object can translate and rotate with respect to the camera. A two-dimension interpolation is performed, via a two-dimension Fast Fourier Transform (FFT).
-    A special case where the angle θ is fixed (and known). This situation is applicable when the object can only translate along two axes with respect to the camera. An *X-Y* interpolation is performed, the precise position being computed by projecting the two-dimension pattern along the vertical and horizontal axis of the checkerboard and performing a one-dimension phase computation as in the case of a standard one-dimension system.

To perform an *X-Y* interpolation, the angle θ is supposed to be known, and for the purpose of the explanation, we can consider, without limitation of the generality that the camera is more or less aligned with the checkerboard. If the angle θ is different from 0, the image acquired by the camera shall be firstly rotated by an angle -θ. By making independently the sum of the lines and the sum of the columns, we get two signals on which a one-dimension phase computation according to a method known by one skilled in the art, for example as disclosed in the article "High-resolution optical position encoder with large mounting tolerances" by K. Engelhardt and P. Seitz in Applied Optics (May 1997), or in document EP 1750099, can be performed independently. Phase computation on the sum of the columns gives the position *dY* and phase computation on the sum of the lines gives the position *dX*, both within a period of the checkerboard. The precise absolute location (*X, Y*) is retrieved by decoding the two-dimension absolute code, computing the absolute position, which gives ([X], [Y]), and adding the phase information (*dX,dY*):

$$(X,Y) = (\lfloor X \rfloor + dX, \lfloor Y \rfloor + dY).$$

When using *X-Y* interpolation, the pattern of figure 2(a) is preferred, because the projected pattern does not depend on the value of the absolute code, even if there is a slight tilt between the camera and the pattern. Figure 3 illustrates this phenomenon: in figure 3(b) the projected signal depends on the absolute code, whereas in figure 3(a) the projection is constant.

The two-dimension interpolation is performed when the angle θ of the camera with respect to the surface of the object, on which the code is applied, is unknown. The two-dimension interpolation consists in computing the two-dimension position of the camera (*X, Y, θ*).

We assume that the angle θ of the camera is smaller than 45, i.e. θ ∈ [-45˚...45˚]. A portion of the two-dimension code, including the regular pattern, is acquired by the camera, and a FFT of the acquired portion is computed using known techniques.

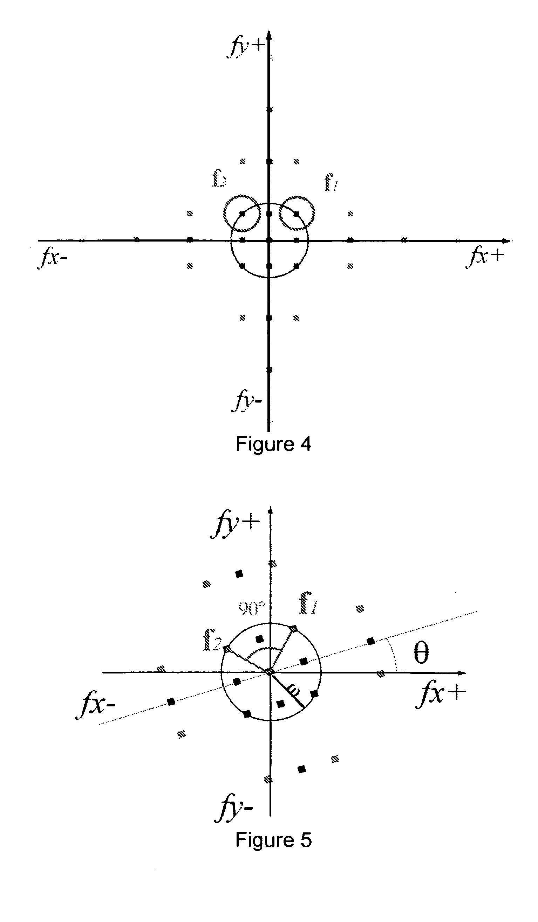

Figure 4 presents a FFT of the regular pattern for an angle θ=0˚, and figure 5 presents a FFT of the regular pattern for an angle θ≠0˚.

The precise two-dimension location is found by searching for the maxima corresponding to the first harmonic of the signal. If the acquired image is a square portion of the two-dimension code, of dimensions m-bit wide and m-bit high, the harmonics are located on a circle of radius ω from the FFT image centre; the FFT image centre being the location of the null frequency. We have $\omega = \sqrt{2} \cdot m$.

The location of the maxima further depends on the angle θ of the camera. The FFT image is tilted by the same angle than the input image, thus, the procedure to find the first harmonic is as follow:

- compute the value of $\omega = \sqrt{2} \cdot m$, the fundamental frequency-which is known a priori,

- find 2 points f1 and $\underline{f}_2$, both at a distance $\hat{\omega}$ from the FFT centre, and disposed together at 90˚ with reference to the FFT centre such that $|FFT(\underline{f}_1)| + |FFT(\underline{f}_2)|$ is maximum,

- compute the angle θ = arctan($f_{1x}/f_{1y}$)-π/4, where ($f_{1x}$, $f_{1y}$) are the coordinates of $\underline{f}_1$, and

- compute the phase angles from FFT($\underline{f}_1$) and FFT($\underline{f}_2$)

where FFT($\underline{f}$) is the amplitude of the FFT image at location $\mathbf{f}$, and where the approximation $\hat{\omega}$ is within 10% of the value of ω. Note that the location of the first harmonic is independent of the X-Y location of the checkerboard.

If the acquired image is a rectangular portion of the two-dimension code of dimensions T-bit wide and U-bit high, the maxima are located on an ellipse whose principal axis are aligned with the coordinates (x,y) of the camera, the ellipse having a width $\omega_x = 2\sqrt{2} \cdot T$ along the horizontal axis x and a height $\omega_y = 2\sqrt{2} \cdot U$ along the vertical axis y. To handle this case, a coordinate transformation (x,y) -> (x,y') is performed, where y' = y × T/U. This transformation performed, the maxima are located on a circle as for a square portion. When the maxima are found in (x,y') coordinates, they are transformed back in (x,y) coordinates to get FFT($\underline{f}_1$) and FFT($\underline{f}_2$).

The phase angles $\gamma_x$ and $\gamma_y$ give the precise location of the camera and are computed from FFT($\underline{f}_1$) and FFT($\underline{f}_2$) as follow:

$$\gamma_x = \frac{1}{2}(\arg[\mathrm{FFT}(\underline{\mathbf{f}}_1)] - \arg[\mathrm{FFT}(\underline{\mathbf{f}}_2)])$$

$$\gamma_y = \frac{1}{2}(\arg[\mathrm{FFT}(\underline{\mathbf{f}}_1)] + \arg[\mathrm{FFT}(\underline{\mathbf{f}}_2)])$$

As in the one-dimension case, the real position is related to the phase by the period M of the printed pattern

$$dX = M \cdot \gamma_x / 2\pi$$

$$dY = M \cdot \gamma_y / 2\pi$$

which gives the absolute position,

$$\begin{bmatrix} X \\ Y \\ \theta \end{bmatrix} = \begin{bmatrix} \lfloor X \rfloor + \cos\theta \cdot dX - \sin\theta \cdot dY \\ \lfloor Y \rfloor + \sin\theta \cdot dX + \cos\theta \cdot dY \\ \theta \end{bmatrix}$$

where ([X], [Y]) is the absolute position computed from the absolute code as for X-Y interpolation.

Figure 5 shows the location $\underline{f}_1$ and $\underline{f}_2$ on the FFT of an image rotated with an angle θ.

The method described above can successfully determine a precise position of an object on which is engraved, printed or projected a pattern. The processing power required is kept quite low for a resolution in the order of the micron, even for large objects to measure, while being resilient to dust. For example, the resolution obtained can be as low as 10 nm, with a period of the regular pattern of 0.1 mm.

## Applications

In addition to simple two-dimension positioning, the present technology may also be applied interestingly for the measurement of the relative orientation (pan, tilt, roll) of two measurement instruments whose positions are known, and for the measurement of the relative position ($X$ and $Y$) of two devices whose orientations are known. A master device-whose position or orientation is known-sends the two-dimension pattern thanks to a hologram and a laser emitter in the direction of a slave device. The slave device contains a system to picture a subset of the pattern. The slave device, which knows a priori the whole two-dimension code, can compute the precise position of the picture subset with respect to the code origin.

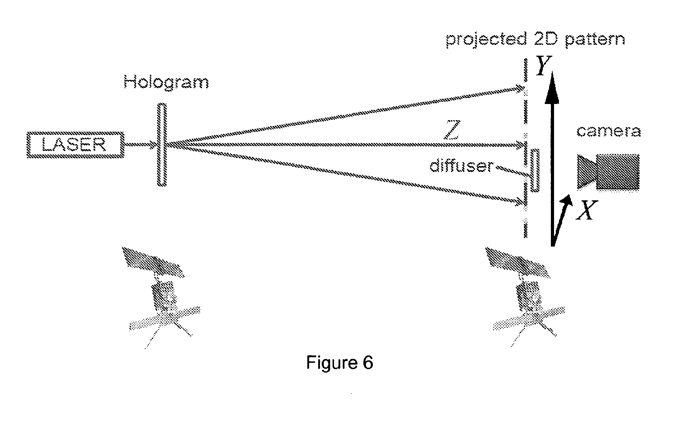

The method can be used to measure the relative position of two satellites in space, in relation with figure 6. The satellites have known orientation and the distance between them is also known. With basic trigonometry, the ($X,Y,Z$) location (Fig. 6) of the slave satellite with respect to the master satellite can be computed.

The method can also be used to measure the speed and the acceleration of the object with respect to the camera, by computing and integrating respectively once and twice the position measured according to the method.

The preceding description is provided as non-limiting examples and one skilled in the art will not encounter any particular difficulties in implementing some variations of embodiment without going outside the scope of the present invention.

In particular, the method was described for a two-dimension position computation, but could be easily reduced to compute a one-dimension position.

Additionally, the regular pattern and the absolute code were described using small squares, but could be without limitation any other geometric shape.

## Claims

1. A two-dimension positioning code, for measuring the two-dimension position of a camera with respect to an object on which said code can be applied, said positioning code being a two-dimension binary absolute positioning code of length x in one dimension and of length y in the other dimension, x and y being integers greater than 0, said absolute positioning code being interlaced with a two-dimension regular pattern

   wherein the two-dimension absolute positioning code is given by

$$b_{t,u+1} = \left\{ \begin{array}{lll} b_{t,u} & \text{if} & a_u = 0 \\ b_{t-1,u} & \text{if} & a_u = 1 \end{array} \right.$$

   with $b_{t,0} = a_t$, and $a_t$ and $a_u$ being binary values of codes $\{a_t\}$ and $\{a_u\}$ respectively, and wherein $t$ is the position within the string $\{a_t\}$, which is the string of values $a_t$ over the entire length x, and $u$ is the position within the string $\{a_u\}$, which is the string of values $a_u$ over the entire length y, and wherein all codewords $\underline{a}_t$, which are subsets of string $\{a_t\}$, are unique within the string $\{a_t\}$ and wherein all codewords $\underline{a}_u$, which are subsets of string $\{a_u\}$, are unique within the string $\{a_u\}$.

2. A code according to claim 1 wherein the two-dimension regular pattern consists of a checkerboard made of squares spaced apart from each other and wherein the two-dimension absolute code is embodied as the orientation of lines, each one of which connects two of the spaced apart checkerboard squares.

3. A two-dimension position measurement system comprising:

   - a code according to claim 1 or 2,
   - an object on which said code is applied,
   - a camera for acquiring a portion of the two-dimension code.

4. A method for measuring a two-dimension position of a camera with respect to an object on which is applied a code according to claim 1 or 2, said method comprising the following steps:

   - acquiring an image of the two-dimension code applied on the object, using the camera,
   - extracting, from the acquired image, the absolute code in the form of a two-dimension matrix $\underline{b}_{t,u}$,

- from said two-dimension matrix $\underline{b}_{t,u}$, decoding an horizontal codeword $\underline{a}_t$ and a vertical codeword $\underline{a}_u$,
- from said horizontal codeword $\underline{a}_t$ and said vertical codeword $\underline{a}_u$, computing the absolute position ([X], [Y]) of the camera with respect to the object, and
- from said absolute position ([X], [Y]) and by using the regular pattern, computing a precise position $(X, Y, \theta)$ of the camera with respect to the object.

5. The method according to claim 4, wherein the elements of the two-dimension matrix $\underline{b}_{t,u}$ are binary data, wherein the vertical codeword $\underline{a}_u$ is decoded using the relation:

$$\mathbf{a}_u := \left( \sum_{t=1}^{n} \mathbf{b}_{t,u} \text{ XOR } \mathbf{b}_{t,u+1} > \sum_{t=1}^{n} \mathbf{b}_{t,u} \text{ XOR } \mathbf{b}_{t+1,u+1} \right)$$

and wherein the horizontal codeword $\underline{a}_t$ is decoded using the relation:

$$a_t = \begin{cases} 0 & \text{if } M_t < 0.5 \\ 1 & \text{else} \end{cases}$$

where

$$M_t = \frac{1}{V} \sum_{i=0}^{V-1} b_{t_i, u+i}$$

$$t_{i+1} = \begin{cases} t_i & \text{if } a_{u+i} = 0 \\ t_i + 1 & \text{else} \end{cases}$$

$$t_0 = t$$

where $V$ is the number of visible bits available to the computation of $M_t$ and

$$\mathbf{a}_t = \begin{bmatrix} a_t & a_{t+1} & a_{t+2} & \dots \end{bmatrix}.$$

6. The method according to claim 4, wherein the elements of the two-dimension matrix $\underline{b}_{t,u}$ are discrete data within the range [0;1], wherein the vertical codeword $\underline{a}_u$ is decoded using the relation:

$$\mathbf{a}_u := \left( \sum_{t=1}^{n} \left| \mathbf{b}_{t,u} - \mathbf{b}_{t,u+1} \right| > \sum_{t=1}^{n} \left| \mathbf{b}_{t,u} - \mathbf{b}_{t+1,u+1} \right| \right)$$

and wherein the horizontal codeword $\underline{a}_t$ is decoding using the relation:

$$a_t = \begin{cases} 0 & \text{if } M_t < 0.5 \\ 1 & \text{else} \end{cases}$$

where

$$M_t = \frac{1}{V} \sum_{i=0}^{V-1} b_{t_i, u+i}$$

$$t_{i+1} = \begin{cases} t_i & \text{if } a_{u+i} = 0 \\ t_i + 1 & \text{else} \end{cases}$$

$$t_0 = t$$

where $V$ is the number of visible bits available to the computation of $M_t$ and

$$\mathbf{a}_t = \begin{bmatrix} a_t & a_{t+1} & a_{t+2} & \cdots \end{bmatrix}.$$

**7.** The method according to claims 5 or 6, wherein the absolute position ([X], [Y]) is computed from the vertical codeword $\underline{a}_u$ and horizontal codeword $\underline{a}_t$ by using the relations

$$\lfloor Y \rfloor = \underset{h}{\operatorname{argmax}} \left( \sum_{i=0}^{n} \operatorname{Corr}(a_{u=i}, \{a_{u+h}\}) \right)$$

$$\lfloor X \rfloor = \underset{h}{\operatorname{argmax}} \left( \sum_{i=0}^{n} \operatorname{Corr}(a_{t=i}, \{a_{t+h}\}) \right) + \sum_{i=0}^{\lfloor Y \rfloor} a_{u=i}$$

where $\{a_t\}$ is the whole horizontal code and and $\{a_u\}$ is the whole vertical code and Corr() is the correlation function.

**8.** The method according to claim 7, wherein the angle θ is already known, and wherein the precise position (*X*, *Y*) is computed with the following steps:

- rotating the acquired image by an angle -θ,
- computing the sum of the columns of the rotated image,
- computing the phase *dY* of the sum of the columns,
- computing the sum of the lines of the rotated image,
- computing the phase *dX* of the sum of the lines,
- computing the precise position (*X*, *Y*) by using the relation

$$(X, Y) = (\lfloor X \rfloor + dX, \lfloor Y \rfloor + dY).$$

where (*X*], [*Y*]), is the absolute position computed from the absolute code.

9. The method according to claim 7, wherein the precise position (*X*, *Y*, θ) is computed with the following steps:

- extracting the two-dimension regular pattern from the acquired image,
- computing a two-dimension FFT of the two-dimension regular pattern,

- computing the value of $\omega = \sqrt{2} \cdot m$, where *m* is the number of shapes of the two-dimension regular pattern in the width of the acquired image,

- find 2 points $\underline{f}_1$ and $\underline{f}_2$, both at a distance $\hat{\omega}$ from the FFT centre, and disposed together at 90˚ with reference to the FFT centre, such that $|FFT(\underline{f}_1)|+|FFT(\underline{f}_2)|$ is maximum, where $|FFT(\underline{f})|$ is the amplitude of the FFT image at location $\underline{f}$ and where $\hat{\omega}$ is an approximation of ω,

- computing the angle θ = arctan $(f_{1x}/f_{1y})$- π/4, where $(f_{1x}, f_{1y})$ are the coordinates of $\underline{f}_1$,
- computing phase angles $\gamma_x$ and $\gamma_y$ from FFT($\underline{f}_1$) and FFT($\underline{f}_2$), with the relation

$$\gamma_x = \frac{1}{2}\left(\arg[\mathrm{FFT}(\underline{\mathbf{f}}_1)] - \arg[\mathrm{FFT}(\underline{\mathbf{f}}_2)]\right)$$

$$\gamma_y = \frac{1}{2}\left(\arg[\mathrm{FFT}(\underline{\mathbf{f}}_1)] + \arg[\mathrm{FFT}(\underline{\mathbf{f}}_2)]\right)$$

- computing a relative precise (dX, dY) position with the relation

$$dX = M \cdot \gamma_x / 2\pi$$

$$dY = M \cdot \gamma_y / 2\pi$$

where *M* is the period of the regular pattern, and
- computing the precise position (*X*, *Y*, θ)

$$\begin{bmatrix} X \\ Y \\ \theta \end{bmatrix} = \begin{bmatrix} \lfloor X \rfloor + \cos\theta \cdot dX - \sin\theta \cdot dY \\ \lfloor Y \rfloor + \sin\theta \cdot dX + \cos\theta \cdot dY \\ \theta \end{bmatrix}$$

where ([X], [Y]), is the absolute position computed from the absolute code.

**Patentansprüche**

1. Zweidimensionaler Positionierungscode zum Messen der zweidimensionalen Position einer Kamera in Bezug auf ein Objekt, auf das der Code angewendet werden kann, wobei der Positionierungscode ein zweidimensionaler binärer absoluter Positionierungscode einer Länge x in einer Dimension und einer Länge y in der anderen Dimension ist, x und y ganze Zahlen größer als 0 sind und der absolute Positionierungscode mit einem zweidimensionalen regelmäßigen Muster verschachtelt ist, wobei der zweidimensionale absolute Positionierungscode durch

$$b_{t,u} + 1 = \begin{cases} b_{t,u} & \text{if} & a_u = 0 \\ b_{t-1,u} & \text{else} & a_u = 1 \end{cases}$$

gegeben ist, wobei $b_{t,0} = a_t$, und $a_t$ und $a_u$ Binärwerte der Codes $\{a_t\}$ bzw. $\{a_u\}$ sind, und wobei $t$ die Position innerhalb des Strings $\{a_t\}$ ist, welcher der String von Werten $a_t$ über die gesamte Länge x ist, und $u$ die Position innerhalb des Strings $\{a_u\}$ ist, welcher der String von Werten $a_u$ über die gesamte Länge y ist, und wobei alle Codewörter $\underline{a}_t$, welche Teilsätze des Strings $\{a_t\}$ sind, innerhalb des Strings $\{a_t\}$ eindeutig sind, und wobei alle Codewörter $\underline{a}_u$, welche Teilsätze des Strings $\{a_u\}$ sind, innerhalb des Strings $\{a_u\}$ eindeutig sind.

2. Code nach Anspruch 1, wobei das zweidimensionale regelmäßige Muster aus einem Schachbrett besteht, das aus voneinander beabstandeten Quadraten gebildet ist, und wobei der zweidimensionale absolute Code als die Orientierung von Zeilen ausgedrückt ist, welche jeweils zwei der beabstandeten Schachbrettquadrate verbinden.

3. Zweidimensionales Positionsmesssystem, umfassend:

   - einen Code nach Anspruch 1 oder 2,
   - ein Objekt, auf das der Code angewendet wird,
   - eine Kamera zum Erfassen eines Abschnitts des zweidimensionalen Codes.

4. Verfahren zum Messen einer zweidimensionalen Position einer Kamera in Bezug auf ein Objekt, auf das ein Code nach Anspruch 1 oder 2 angewendet wird, wobei das Verfahren die folgenden Schritte umfasst:

   - Erfassen eines Bildes des zweidimensionalen Code, der auf das Objekt angewendet wird, unter Verwendung der Kamera,
   - Extrahieren aus dem erfassten Bild des absoluten Codes in der Form einer zweidimensionalen Matrix $b_{t,u}$,
   - Decodieren aus der zweidimensionalen Matrix $\underline{b}_{t,u}$ eines horizontalen Codeworts $\underline{a}_t$ und eines vertikalen Codeworts $\underline{a}_u$,
   - Berechnen aus dem horizontalen Codewort $\underline{a}_t$ und dem vertikalen Codewort $\underline{a}_u$ der absoluten Position ($[X]$, $[Y]$) der Kamera in Bezug auf das Objekt, und
   - Berechnen aus der absoluten Position ($[X]$, $[Y]$) und durch Verwenden des regelmäßigen Musters einer exakten Position ($X, Y, \theta$) der Kamera in Bezug auf das Objekt.

5. Verfahren nach Anspruch 4, wobei die Elemente der zweidimensionalen Matrix $\underline{b}_{t,u}$ Binärdaten sind, wobei das vertikale Codewort $\underline{a}_u$ unter Verwendung der Beziehung

$$\underline{a}_u := \left( \sum_{t=1}^{n} \underline{b}_{t,u} XOR \underline{b}_{t,u+1} > \sum_{t=1}^{n} \underline{b}_{t,u} XOR \underline{b}_{t+1,u+1} \right)$$

decodiert wird, und wobei das horizontale Codewort $\underline{a}_t$ unter Verwendung der Beziehung

$$a_t = \begin{cases} 0 & \text{if} & M_t < 0,5 \\ 1 & 1 & \text{else} \end{cases}$$

decodiert wird, wobei

$$M_t = \frac{1}{V} \sum_{i=0}^{V-1} b_{t_i, u+i}$$

$$t_{i+1} = \begin{cases} t_i & \text{if } a_{u+i} = 0 \\ t_i + 1 & \text{else} \end{cases}$$

$$t_0 = t$$

wobei V die Anzahl von sichtbaren Bits ist, die für die Berechnung von $M_t$ und

$$\underline{a}_t = \begin{bmatrix} a_t & a_{t+1} & a_{t+2} & \ldots \end{bmatrix}.$$

verfügbar sind.

6. Verfahren nach Anspruch 4, wobei die Elemente der zweidimensionalen Matrix $\underline{b}_{t,u}$ diskrete Daten innerhalb des Bereichs [0; 1] sind, wobei das vertikale Codewort $\underline{a}_u$ unter Verwendung der Beziehung

$$\underline{a}_u := \left( \sum_{t=1}^{n} \left| \underline{b}_{t,u} - \underline{b}_{t,u+1} \right| > \sum_{t=1}^{n} \left| \underline{b}_{t,u} - \underline{b}_{t+1,u+1} \right| \right)$$

decodiert wird, und wobei das horizontale Codewort $\underline{a}_t$ unter Verwendung der Beziehung

$$a_t = \begin{cases} 0 & \text{if} & M_t < 0{,}5 \\ 1 & 1 & \text{else} \end{cases}$$

decodiert wird, wobei

$$M_t = \frac{1}{V} \sum_{i=0}^{V-1} b_{t_i, u+i}$$

$$t_{i+1} = \begin{cases} t_i & \text{if } a_{u+i} = 0 \\ t_i + 1 & \text{else} \end{cases}$$

$$t_0 = t$$

wobei V die Anzahl von sichtbaren Bits ist, die für die Berechnung von $M_t$ und

$$\underline{a}_t = \begin{bmatrix} a_t & a_{t+1} & a_{t+2} & \ldots \end{bmatrix}$$

verfügbar sind.

**7.** Verfahren nach Anspruch 5 oder 6, wobei die absolute Position ([$X$], [$Y$]) aus dem vertikalen Codewort $\underline{a}_u$ und dem horizontalen Codewort $\underline{a}_t$ durch Verwenden der Beziehungen

$$\lfloor Y \rfloor \quad = \quad \arg\max h\left( \sum_{i=0}^{n} Corr\left(a_{u=i}, \{a_{u+h}\}\right) \right)$$

$$\lfloor X \rfloor \quad = \quad \arg\max h\left( \sum_{i=0}^{n} Corr\left(a_{t=i}, \{a_{t+h}\}\right) \right) + \sum_{i=0}^{\lfloor Y \rfloor} a_{u=1}$$

berechnet wird, wobei {$a_t$} der ganze horizontale Code ist, und {$a_u$} der ganze vertikale Code ist, und Cord() die Korrelationsfunktion ist.

**8.** Verfahren nach Anspruch 7, wobei der Winkel θ bereits bekannt ist, und wobei die exakte Position ($X$, $Y$) mit den folgenden Schritten berechnet wird:

- Drehen des erfassten Bildes um einen Winkel-θ,
- Berechnen der Summe der Spalten des gedrehten Bildes,
- Berechnen der Phase dY der Summe der Spalten,
- Berechnen der Summe der Reihen des gedrehten Bildes,
- Berechnen der Phase dX der Summe der Reihen,
- Berechnen der exakten Position ($X$, $Y$) durch Verwenden der Beziehung

$$(X,Y) = \left( \lfloor X \rfloor + dX, \lfloor Y \rfloor + dY \right).$$

wobei ([$X$], [$Y$]) die absolute Position ist, die aus dem absoluten Code berechnet ist.

**9.** Verfahren nach Anspruch 7, wobei die exakte Position ($X$, $Y$, θ) mit den folgenden Schritten berechnet wird:

- Extrahieren des zweidimensionalen regelmäßigen Musters aus dem erfassten Bild,
- Berechnen einer zweidimensionalen FFT des zweidimensionalen regelmäßigen Musters,
- Berechnen des Wertes von $\omega = \sqrt{2} \cdot m$ , wobei m die Anzahl von Formen des zweidimensionalen regelmäßigen Musters in der Breite des erfassten Bildes ist,
- Finden von 2 Punkten $\underline{f}_1$ und $\underline{f}_2$, beide in einem Abstand $\hat{\omega}$ von der FFT-Mitte und zusammen bei 90˚ in Bezug auf die FFT-Mitte angeordnet, derart dass $|FFT(f_1)|+|FFT(f_2)|$ maximal ist, wobei $|FFT(f)|$ die Amplitude des FFT-Bildes an der Stelle $\underline{f}$ ist, und wobei $\hat{\omega}$ eine Näherung von ω ist,
- Berechnen des Winkels θ=arctan($f_{1x}/f_{1y}$)-π/4, wobei ($f_{1x}, f_{1y}$) die Koordinaten von $\underline{f}_1$ sind,
- Berechnen der Phasenwinkel $\gamma_x$ und $\gamma_y$ aus $FFT(\underline{f}_1)$ und $FFT(\underline{f}_2)$ mit der Beziehung

$$\gamma_x = \frac{1}{2}\left( \arg\left[FFT\left(\underline{f}_1\right)\right] - \arg\left[FFT\left(\underline{f}_2\right)\right] \right)$$

$$\gamma_y = \frac{1}{2}\left( \arg\left[FFT\left(\underline{f}_1\right)\right] + \arg\left[FFT\left(\underline{f}_2\right)\right] \right)$$

- Berechnen einer relativen genauen (*dX*,*dY*)-Position mit der Beziehung

$$dX = M \cdot \gamma_x / 2\pi$$

$$dY = M \cdot \gamma_y / 2\pi$$

wobei M die Periode des regelmäßigen Musters ist, und
- Berechnen der exakten Position (*X*, *Y*,θ)

$$\begin{bmatrix} X \\ Y \\ \theta \end{bmatrix} = \begin{bmatrix} \lfloor X \rfloor + \cos\theta \cdot dX - \sin\theta \cdot dY \\ \lfloor Y \rfloor + \sin\theta \cdot dX + \cos\theta \cdot dY \\ \theta \end{bmatrix}$$

wobei ([X], [Y]) die absolute Position ist, die aus dem absoluten Code berechnet ist.

**Revendications**

1.  Code de positionnement bidimensionnel, pour mesurer la position bidimensionnelle d'une caméra par rapport à un objet sur lequel ledit code peut être appliqué, ledit code de positionnement étant un code de positionnement absolu binaire bidimensionnel de longueur x dans une première dimension et de longueur y dans l'autre dimension, x et y étant des nombres entiers positifs, ledit code de positionnement absolu étant entrelacé avec un motif régulier bidimensionnel,
    dans lequel le code de positionnement absolu bidimensionnel est donné par la relation

$$b_{t,u} + 1 = \begin{cases} b_{t,u} & \text{if} & a_u = 0 \\ b_{t-1,u} & \text{if} & a_u = 1 \end{cases}$$

avec $b_{t,0} = a_t$, et $a_t$ et $a_u$ étant les valeurs binaires respectives des codes $\{a_t\}$ et $\{a_u\}$, et dans lequel t est la position dans la chaîne $\{a_t\}$, qui est la chaîne des valeurs $a_t$ sur toute la longueur x, et u est la position dans la chaîne $\{a_u\}$, qui est la chaîne des valeurs $a_u$ sur toute la longueur y, et dans lequel tous les mots de code $\underline{a}_t$, qui sont des sous-ensembles de la chaîne $\{a_t\}$, sont uniques dans la chaîne $\{a_t\}$, et dans lequel tous les mots de code $\underline{a}_{u'}$, qui sont des sous-ensembles de la chaîne $\{a_u\}$, sont uniques dans la chaîne $\{a_u\}$.

2.  Code selon la revendication 1, dans lequel le motif régulier bidimensionnel consiste en un damier composé de carrés espacés les uns des autres et dans lequel le code absolu bidimensionnel est réalisé par l'orientation de lignes, chacune d'elles reliant deux des carrés espacés du damier.

3.  Système de mesure de position bidimensionnel, comprenant :

    - un code selon la revendication 1 ou 2,
    - un objet sur lequel est appliqué ledit code,
    - une caméra pour acquérir une partie du code bidimensionnel.

4.  Procédé pour mesurer la position bidimensionnelle d'une caméra par rapport à un objet sur lequel est appliqué un code selon la revendication 1 ou 2, ledit procédé comprenant les étapes suivantes :

- acquisition d'une image du code bidimensionnel appliqué sur l'objet, au moyen de la caméra,
- extraction, à partir de l'image acquise, du code absolu sous la forme d' une matrice bidimensionnelle $\underline{b}_{t,u}$,
- à partir de ladite matrice bidimensionnelle $\underline{b}_{t,u}$, décodage d'un mot de code horizontal $\underline{a}_t$ et d'un mot de code vertical $\underline{a}_u$,
- à partir dudit mot de code horizontal $\underline{a}_t$ et dudit mot de code vertical $\underline{a}_u$, calcul de la position absolue ([X],[Y] de la caméra par rapport à l'objet, et
- à partir de ladite position absolue ([X],[Y] et au moyen du motif régulier, calcul de la position précise ($X, Y, \theta$) de la caméra par rapport à l'objet.

5. Procédé selon la revendication 4, dans lequel les éléments de la matrice bidimensionnelle $b_{t,u}$ sont des données binaires, dans lequel le mot de code vertical $\underline{a}_u$ est décodé au moyen de la relation :

$$\underline{a}_u := \left( \sum_{t=1}^{n} \underline{b}_{t,u} XOR \underline{b}_{t,u+1} > \sum_{t=1}^{n} \underline{b}_{t,u} XOR \underline{b}_{t+1,u+1} \right)$$

et dans lequel le mot de code horizontal $a_t$ est décodé au moyen de la relation :

$$a_t = \begin{cases} 0 & \text{if} \quad M_t < 0,5 \\ 1 & \text{else} \end{cases}$$

où

$$M_t = \frac{1}{V} \sum_{i=0}^{V-1} b_{t_i,u+i}$$

$$t_{i+1} = \begin{cases} t_i & \text{if } a_{u+i} = 0 \\ t_i + 1 & \text{else} \end{cases}$$

$$t_0 = t$$

où V est le nombre de bits visibles disponibles pour le calcul de $M_t$ et

$$\underline{a}_t = \begin{bmatrix} a_t & a_{t+1} & a_{t+2} & ... \end{bmatrix}.$$

6. Procédé selon la revendication 4, dans lequel les éléments de la matrice bidimensionnelle $b_{t,u}$ sont des données discrètes dans la plage [0 ; 1], dans lequel le mot de code vertical $\underline{a}_u$ est décodé au moyen de la relation :

$$\underline{a}_u := \left( \sum_{t=1}^{n} \left| \underline{b}_{t,u} - \underline{b}_{t,u+1} \right| > \sum_{t=1}^{n} \left| \underline{b}_{t,u} - \underline{b}_{t+1,u+1} \right| \right)$$

et dans lequel le mot de code horizontal $\underline{a}_t$ est décodé au moyen de la relation :

18

$$a_t = \begin{cases} 0 & \text{if} \quad M_t < 0,5 \\ 1 & \text{else} \end{cases}$$

où

$$M_t = \frac{1}{V} \sum_{i=0}^{V-1} b_{t_i, u+i}$$

$$t_{i+1} = \begin{cases} t_i & \text{if } a_{u+i} = 0 \\ t_i + 1 & \text{else} \end{cases}$$

$$t_0 = t$$

où V est le nombre de bits visibles disponibles pour le calcul de $M_t$ et

$$\underline{a}_t = \begin{bmatrix} a_t & a_{t+1} & a_{t+2} & ... \end{bmatrix}.$$

7. Procédé selon la revendication 5 ou 6, dans lequel la position absolue ([X],[Y]) est calculée à partir du mot de code vertical $\underline{a}_u$ et du mot de code horizontal $\underline{a}_t$ au moyen des relations

$$\lfloor Y \rfloor \quad = \quad \arg\max h\left( \sum_{i=0}^{n} Corr\left(a_{u=i}, \{a_{u+h}\}\right) \right)$$

$$\lfloor X \rfloor \quad = \quad \arg\max h\left( \sum_{i=0}^{n} Corr\left(a_{t=i}, \{a_{t+h}\}\right) \right) + \sum_{i=0}^{\lfloor Y \rfloor} a_{u=1}$$

où $\{a_t\}$ est le code horizontal complet et $\{a_u\}$ est le code vertical complet et Corr() est la fonction de corrélation.

8. Procédé selon la revendication 7, dans lequel l'angle θ est déjà connu, et dans lequel la position précise (*X,Y*) est calculée par les étapes suivantes :

- rotation de l'image acquise d'un angle -θ,
- calcul de la somme des colonnes de l'image après rotation,
- calcul de la phase dY de la somme des colonnes,
- calcul de la somme des lignes de l'image après rotation,
- calcul de la phase dX de la somme des lignes,
- calcul de la position précise (*X,Y*) au moyen de la relation

$$(X,Y) = \left( \lfloor X \rfloor + dX, \lfloor Y \rfloor + dY \right).$$

où ([X],[Y]) est la position absolue calculée à partir du code absolu.

9. Procédé selon la revendication 7, dans lequel la position précise (X,Y,θ) est calculée avec les étapes suivantes :

- extraction du motif régulier bidimensionnel à partir de l'image acquise,
- calcul d'une FFT bidimensionnelle du motif régulier bidimensionnel,

- calcul de la valeur de $\omega = \sqrt{2} \cdot m$, où m est le nombre de formes du motif régulier bidimensionnel dans la largeur de l'image acquise,
- recherche de deux points $f_1$ et $f_2$, tous deux à une distance $\hat{\omega}$ du centre de la FFT, et disposés ensemble à 90˚ par rapport au centre de la FFT, tels que $|FFT(f_1)|+|FFT(f_2)|$ est maximum, où $|FFT(f)|$ est l'amplitude de l'image FFT à l'emplacement f et où $\hat{\omega}$ est une approximation de w,
- calcul de l'angle θ =arctan($f_{1x}/f_{1y}$)-π/4, où ($f_{1x}$, $f_{1y}$) sont les coordonnées de $f_1$,
- calcul des angles de phase $\gamma_x$ et $\gamma_y$ à partir de $FFT(f_1)$ et de $FFT(f_2)$ avec la relation

$$\gamma_x = \frac{1}{2}\left(\arg\left[FFT\left(\underline{f}_1\right)\right] - \arg\left[FFT\left(\underline{f}_2\right)\right]\right)$$

$$\gamma_y = \frac{1}{2}\left(\arg\left[FFT\left(\underline{f}_1\right)\right] + \arg\left[FFT\left(\underline{f}_2\right)\right]\right)$$

- calcul d'une position précise relative (dX,dY) avec la relation

$$dX = M \cdot \gamma_x / 2\pi$$

$$dY = M \cdot \gamma_y / 2\pi$$

où M est la période du motif régulier, et
- calcul de la position précise (X,Y,θ)

$$\begin{bmatrix} X \\ Y \\ \theta \end{bmatrix} = \begin{bmatrix} \lfloor X \rfloor + \cos\theta \cdot dX - \sin\theta \cdot dY \\ \lfloor Y \rfloor + \sin\theta \cdot dX + \cos\theta \cdot dY \\ \theta \end{bmatrix}$$

où ([X],[Y]) est la position absolue calculée à partir du code absolu.

Figure 1

(a)                                        (b)

Figure 2

(a)                                        (b)

Figure 3

Figure 4

Figure 5

Figure 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006067481 A
- EP 1553487 A
- EP 1750099 A

**Non-patent literature cited in the description**

- High-resolution optical position encoder with large mounting tolerances. **K. Engelhardt ; P. Seitz.** Applied Optics. May 1997